# EUROPÄISCHE PATENTANMELDUNG

(11) **EP 1 134 864 A1**
(43) Veröffentlichungstag der Anmeldung: **19.09.2001**
(21) Anmeldenummer: 01106267.6
(22) Anmeldetag: 14.03.2001
(51) Int. Cl.: H02G 3/00

(54) **Verfahren und graphisches Werkzeug zum Projektieren von Elektroinstallationskomponenten eines Gebäudes**

(30) Priorität: 14.03.2000 DE 10012279
(71) Anmelder: SIEMENS AKTIENGESELLSCHAFT, 80333 München (DE)
(72) Erfinder: Hoffmann, Werner, Dr., 91074 Herzogenaurach (DE); Knorr, Christian, 93087 Alteglofsheim (DE); Lermer, Josef, 93098 Mintraching (DE); Luber, Georg, 93158 Teublitz (DE); Valerius, Arno, 90427 Nürnberg (DE)

(57) **Zusammenfassung**

Die Erfindung betrifft ein Verfahren und ein graphisches Werkzeug zum Projektieren von Elektroinstallationskomponenten eines Gebäudes. Dabei wird eine Geräteliste zur Verfügung gestellt, die die zu projektierenden Geräte enthält. Aus dieser Liste werden einzelnen Räumen des Gebäudes Geräte zugeordnet. Zur Einzelprojektierung eines Raumes wird jeder Raum durch ein eigenes Fenster dargestellt, in welchem die Geräte des Raumes angezeigt werden. Unter Verwendung von Assistenten werden die im Fenster platzierten Geräte graphisch gemäß elektrischer Schaltungen, wie sie der Elektroinstallateur von der herkömmlichen Technik kennt, miteinander verschaltet.

## Beschreibung

Die Erfindung betrifft ein Verfahren und ein graphisches Werkzeug zum Projektieren von Elektroinstallationskomponenten eines Gebäudes.

Der Erfindung liegt folgendes technische Problem zugrunde: Elektroinstallationen in Gebäuden werden zunehmend unter Verwendung einer Bustechnik realisiert. Dabei sind alle zu schaltende Stromverbraucher (Lampen, Jalousie-Motoren, usw.) über Aktoren und die Sensoren (Taster, Kontakte, usw.) über einen Kommunikationsbus, wie beispielsweise den instabus ® EIB (European Installation Bus) in den Techniken Twisted Pair (TP), Radio Frequency (RF), Power Line (PL), miteinander verbunden. Die Stromverbraucher sind über die Aktoren auch direkt am 220V-Stromnetz angeschlossen. Das Schalten einer Lampe geschieht nun durch Senden einer Nachricht vom Sensor, beispielsweise einem Taster, zu dem Aktor mit der angeschlossenen Lampe. Damit dies funktioniert, müssen bei der Inbetriebsetzung diese Kommunikationsbeziehungen projektiert werden.

Bisher fand diese Bustechnik hauptsächlich ihren Einsatz in Industriegebäuden, öffentlichen Gebäuden, Verwaltungsgebäuden, usw. Dort wurde die Inbetriebsetzung der Gebäudeleittechnik von geschulten Projektierern durchgeführt.

Bei bisherigen Lösungen steht den Ingenieuren, die eine Gebäudeleittechnik im Zweckbau auf Basis des EIB in Betrieb nehmen, als PC-basiertes Werkzeug die EIB Tool Software (ETS) der European Installation Bus Association (http://www.eiba.com/a103.html) zur Verfügung. Dies ist ein Datenbank-basiertes graphisches Werkzeug, mittels dessen ein Projekt vollständig projektiert werden kann. Dabei steht der Kommunikationsbus im Mittelpunkt des Denkens. Gruppenadressen dienen dazu, Kommunikationsbeziehungen zwischen Geräten aufzubauen. Außerdem stellt der Einsatz des Werkzeuges Anforderungen an den Anwender, die nur durch spezielle Schulungen erlernbar sind.

Als Alternative zur ETS gibt es Controller-Geräte zur Inbetriebsetzung von derartigen Installationen. Ein Beispiel dafür ist der Busch-Powernet® EIB Controller (http://www.catalogic.de/bje/katalog/d46c.htm) für Busch-Powernet® EIB Anlagen. Diese Controller haben ein Textdisplay mit 4-8 Zeilen. Es handelt sich also nicht um graphische Werkzeuge.

Ausgehend von diesem Stand der Technik liegt der Erfindung die Aufgabe zugrunde, einen Weg aufzuzeigen, wie auch im Heimbereich eine einfache Inbetriebnahme einer auf Bustechnik basierenden Elektroinstallation ermöglicht werden kann.

Diese Aufgabe wird durch ein Verfahren mit den im Anspruch 1 angegebenen Merkmalen und ein graphisches Werkzeug mit den im Anspruch 4 angegebenen Merkmalen gelöst. Vorteilhafte Ausgestaltungen und Weiterbildungen der Erfindung ergeben sich aus den abhängigen Ansprüchen.

Die Vorteile der Erfindung liegen darin, dass beispielsweise mittels eines einfachen, graphischen, Personal-Computer- oder Palmtop-basierten Werkzeugs ein Elektroinstallateur, der im Heimbereich Planer und Inbetriebsetzer in einem ist, in die Lage versetzt wird, ein einfaches EIB Projekt im Wohnbau schnell, kostengünstig und ohne Schulungsaufwand in Betrieb zu nehmen. Dabei kann der Installateur in seiner gewohnten Denkwelt verbleiben. Diese ist gekennzeichnet durch Schaltungen wie eine Ausschaltung, eine Wechselschaltung, eine Serienschaltung usw.. Realisiert wird dieser Ansatz durch sogenannte Assistenten (Wizzards), die dem Anwender helfen, derartige Schaltungen zu spezifizieren.

Ausgangsbasis für die erfindungsgemäße Projektierung von Schaltungen ist eine Geräteliste. In dieser Geräteliste sind alle Geräte wie Taster, Zeitschaltuhren, Jalousie-Ansteuerungen, usw., für ein Projekt, beispielsweise ein Wohnhaus, enthalten. Geräte wie 2-fach-Taster oder 2-fach-Aktoren zum Ansteuern von 2 Verbrauchern bestehen wiederum aus 2 bzw. mehreren Gerätekanälen. Für die nachfolgende Beschreibung ist aber diese Unterscheidung zwischen Gerät und Gerätekanal nicht von Bedeutung. Es wird daher nur von Geräten gesprochen. Bei Geräten mit mehreren Kanälen ist das Wort Gerät durch Gerätekanal zu ersetzen.

In einem ersten Schritt ordnet der Anwender in der Geräteliste enthaltene Geräte den Räumen seines Projektes bzw. Gebäudes zu. So kann er beispielsweise ein Wohnzimmer, einen Flur und eine Küche einrichten. Jeder Raum wird durch ein eigenes Fenster im Werkzeug dargestellt. Durch Verschieben von Geräten mit der Maus vom Fenster "Geräteliste" in das Fenster "Wohnzimmer" werden die Geräte dort platziert. Danach erfolgt eine Verschaltung der Geräte.

Im einfachsten Falle will der Installateur beispielsweise eine Ausschaltung realisieren. Dazu wählt er den Aktor für eine Lampe aus. Über das Programm-Menü ruft er die Funktion "Verbinden - Ausschaltung" auf. Daraufhin wird er dazu aufgefordert, den zugehörigen Taster auszuwählen. Dazu muss er den Mauszeiger auf den gewünschten Taster schieben und das Symbol anklicken. Solange unter dem Mauszeiger kein geeigneter Sensor liegt, hat der Mauszeiger die Form eines Verbotsschildes und die Aktion kann nicht beendet werden. Nach dem Anklicken des Tasters ist die Verbindung hergestellt.

In gleicher Weiche verfährt der Anwender bei den anderen Schaltungen. Bei der Wechselschaltung muss er, ausgehend von einem Aktor, zunächst einen ersten Taster anwählen und danach einen zweiten Taster. Bei einer Kreuzschaltung wird er geführt, um beliebig viele Taster auszuwählen. Zur Serienschaltung wählt er zu Beginn einen 2-fach-Taster aus. Dann muss er der Reihe nach die beiden Aktoren auswählen. Weitere Schaltungen, die auf diese Weise realisierbar sind, sind eine Parallelschaltung, eine Gruppenschaltung und eine Zentralschaltung (EIN/AUS).

Aus dieser graphisch erstellten Projektierinformation generiert das Werkzeug alle Kommunikationsbeziehungen, Adressen und Parameter, die für den Betrieb des Busses notwendig sind.

Bei der vorliegenden Erfindung werden in einem Werkzeug zur Projektierung/Inbetriebsetzung einer busorientierten Anlage, beispielsweise einer instabus® EIB-Anlage, Assistenten eingesetzt, die es dem Inbetriebsetzer gestatten, Schaltungen, wie er sie von der herkömmlichen Technik kennt, beispielsweise eine Wechselschaltung, usw., auf graphische Weise einfach und schnell zu beschreiben. Daraus werden alle Daten automatisch gewonnen, die zum Betrieb des Busses mit der spezifizierten Leistung notwendig sind. Zur besseren Übersicht beim Verschalten von Geräten werden die Geräte zunächst ihren Räumen, wo sie wirken bzw. eingebaut sind, zugeordnet. Dies geschieht graphisch unter Verwendung der drag & drop-Technik.

Die folgenden Figuren zeigen beispielhaft die graphische Darstellung einer Serienschaltung, wie sie schrittweise vom Anwender aufgebaut wird.

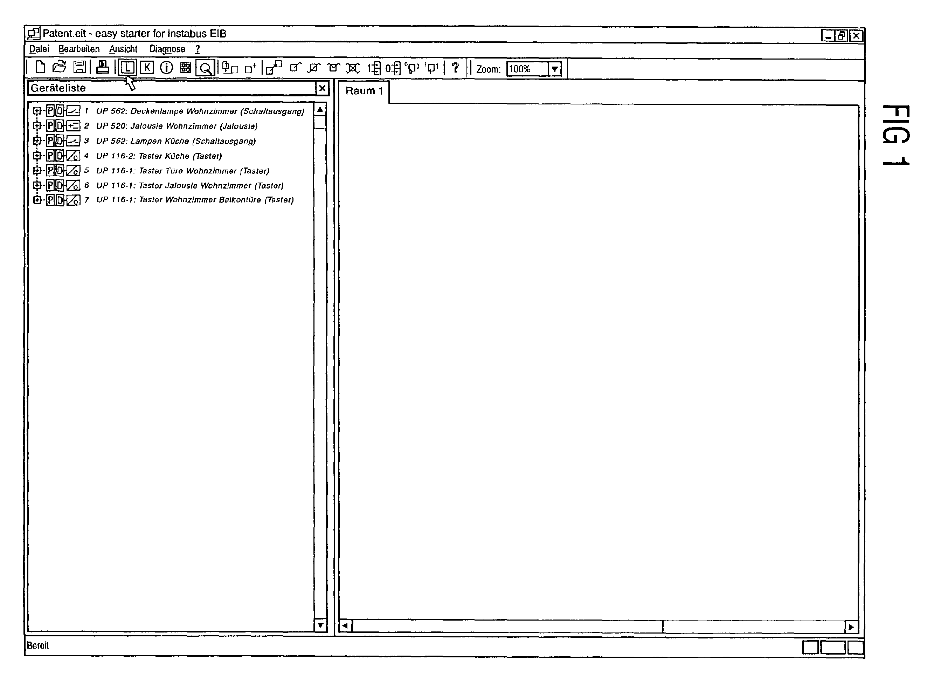

Das gezeigte Beispiel betrifft die Projektierung eines kleinen Wohnbau-Projektes. Ausgangspunkt ist eine Geräteliste. Diese beinhaltet mehrere 1-fach und 2-fach-Taster und einige Aktoren, wie es in der Figur 1 im linken Fenster dargestellt ist. Im ersten Schritt werden in der Geräteliste dargestellte Geräte den Räumen des Gebäudes zugeordnet, beispielsweise einer Küche und einem Wohnzimmer.

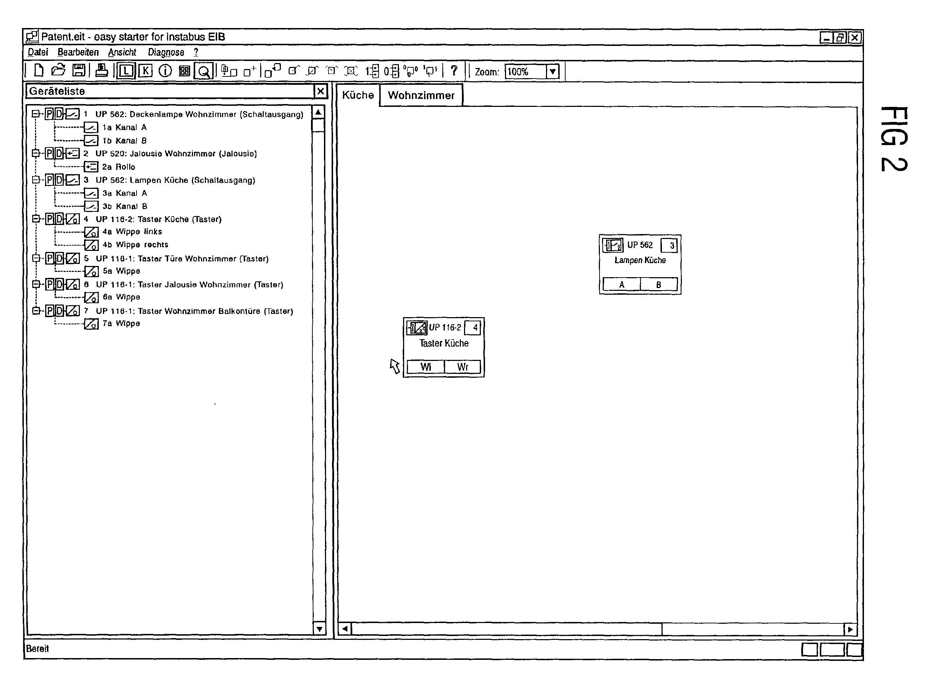

In der Küche gibt es einen 2-fach-Taster zum Schalten von zwei Lampen (Decke, Wand), die an einen 2-fach-Aktor angeschlossen sind, wie es die Figur 2 zeigt, in welcher das der Küche zugeordnete Fenster neben dem Fenster mit der Geräteliste dargestellt ist.

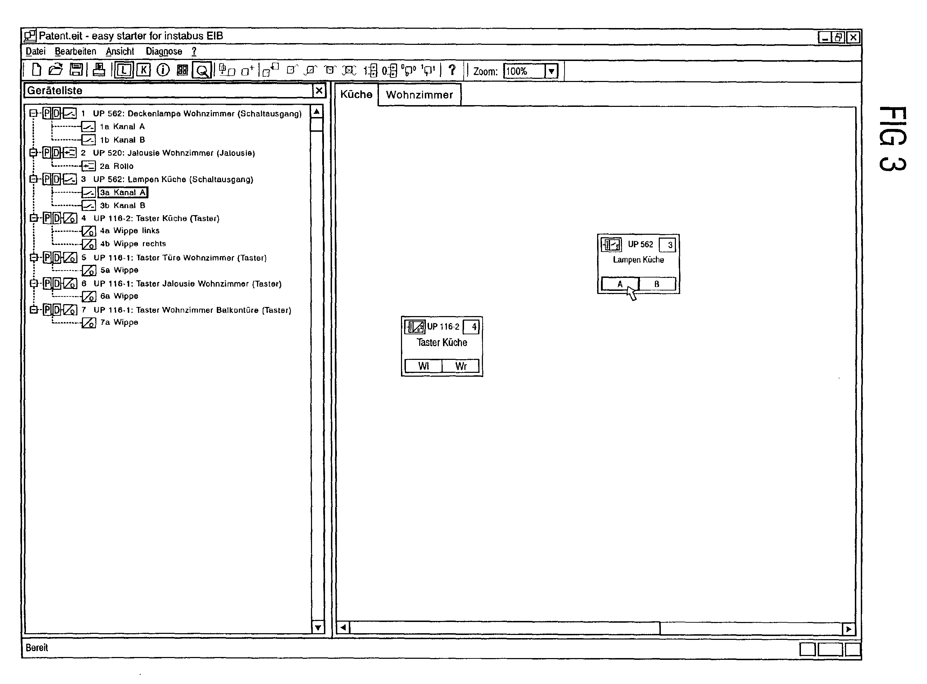

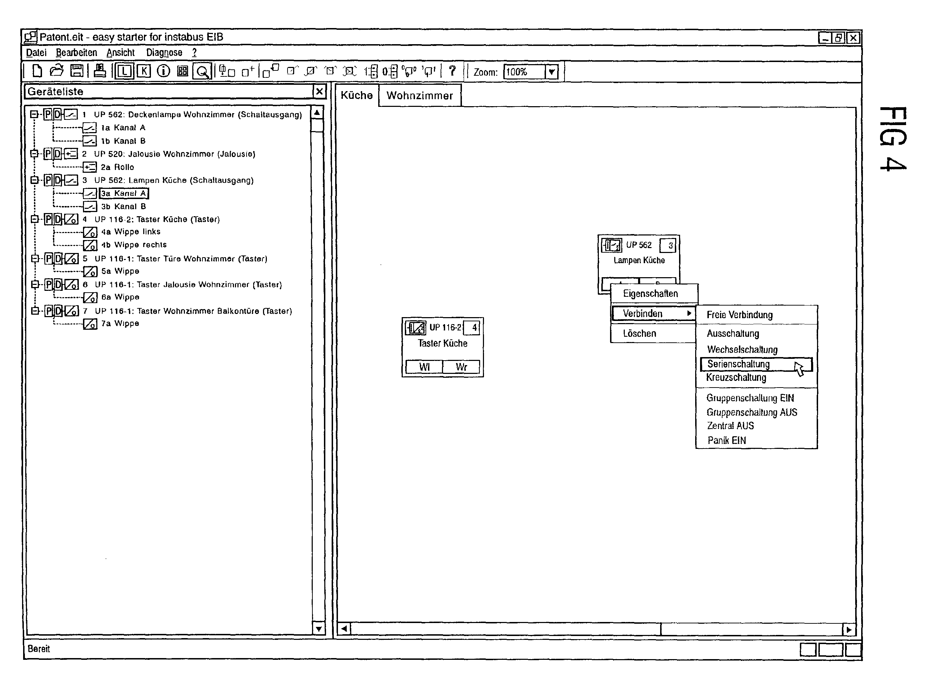

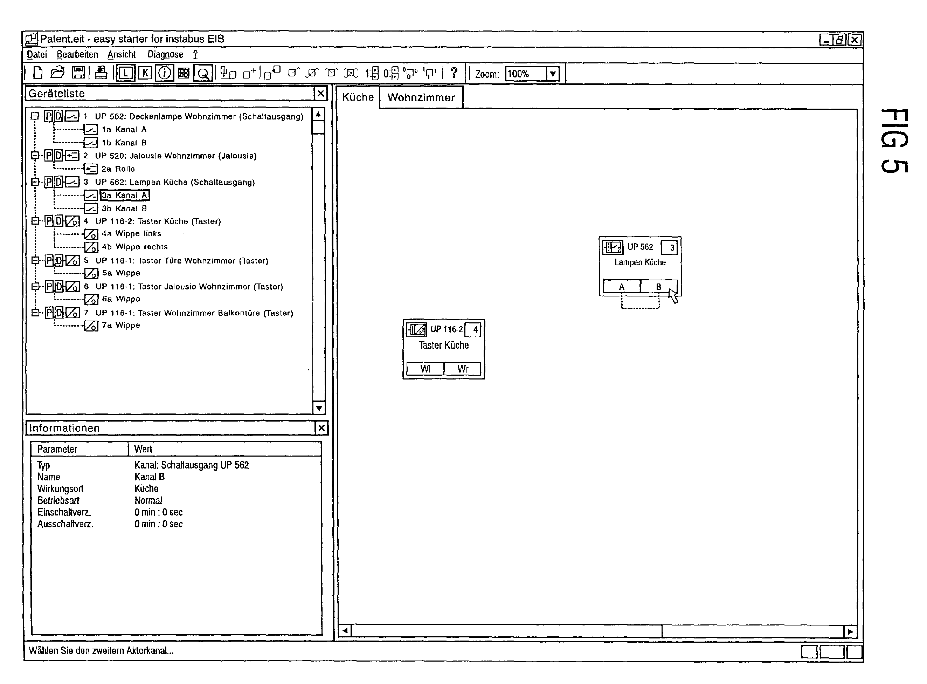

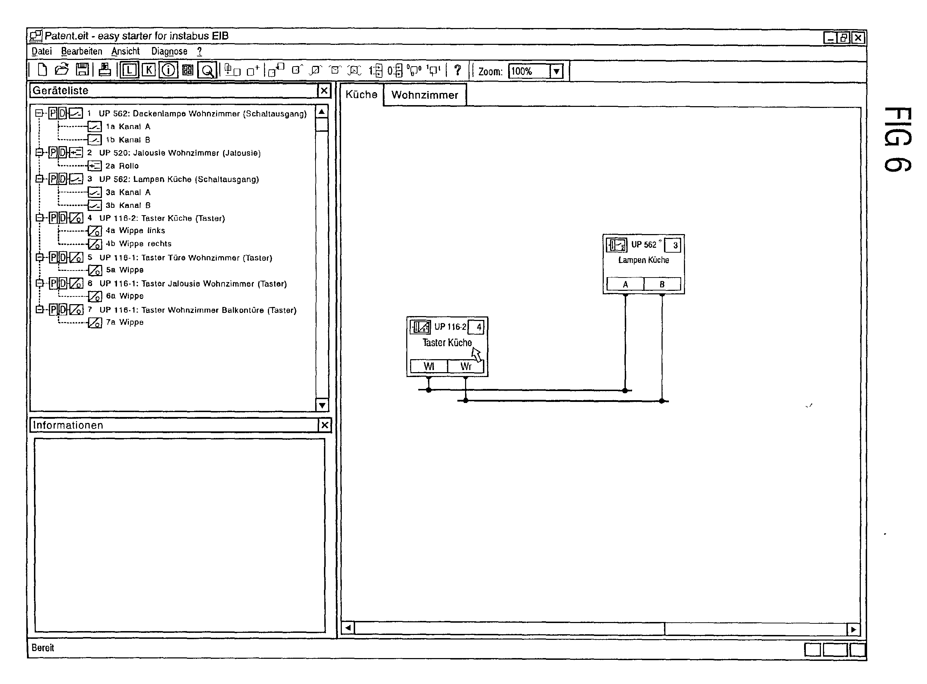

Das Verschalten der Geräte wird mit Hilfe der Assistenten durchgeführt. Als erstes wird eine Serienschaltung in der Küche projektiert. Dazu muss der Anwender den ersten zu schaltenden Aktor anwählen, wie es in der Figur 3 angedeutet ist, und nach Einblendung eines Menüs den Menüpunkt "Verbinden-Serienschaltung" auswählen, wie es durch die Figur 4 veranschaulicht ist. Danach erfolgt eine Auswahl des zweiten Aktors, wie es in der Figur 5 unten links angedeutet ist. Nach dem Anklicken des Aktors wird dazu aufgefordert, einen 2-fach-Taster auszuwählen. Ist dies durch entsprechendes Anklicken erfolgt, dann ist die Verschaltung abgeschlossen und die Verbindungen werden gezeichnet. Dies ist in Figur 6 gezeigt.

Im Wohnzimmer sind zwei 1-fach-Taster (Türe, Balkontüre) zum Schalten der Deckenlampe (2-fach-Aktor, nur einer wird benutzt) und ein 1-fach-Taster für die Jalousie vorgesehen.

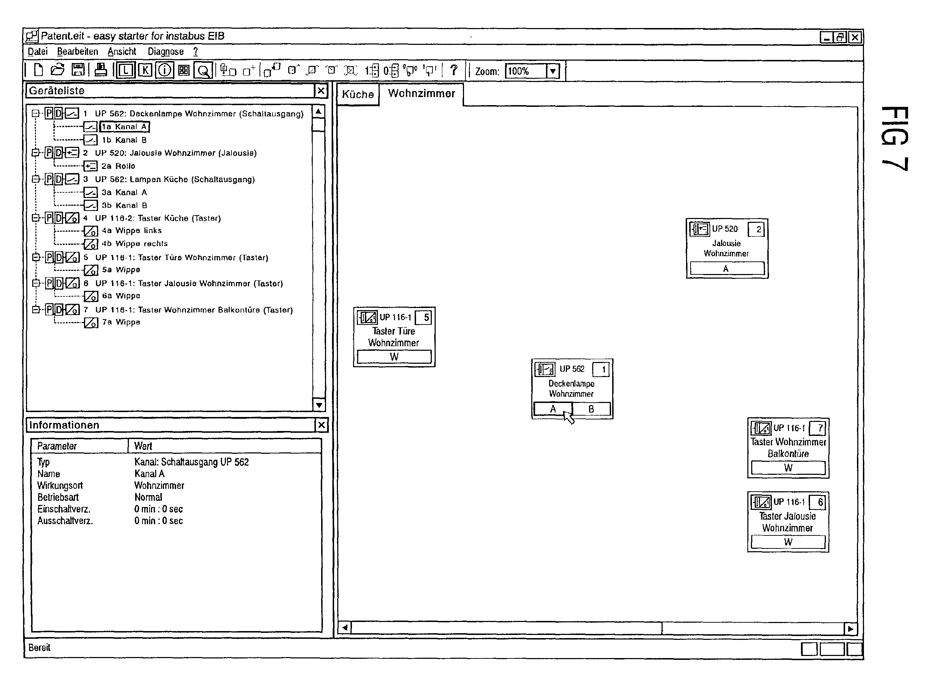

Dort realisiert der Installateur anschließend eine Wechselschaltung für die Deckenlampe, wie aus Figur 7 hervorgeht, in welcher das dem Wohnzimmer zugeordnete Fenster neben dem Fenster mit der Geräteliste dargestellt ist.

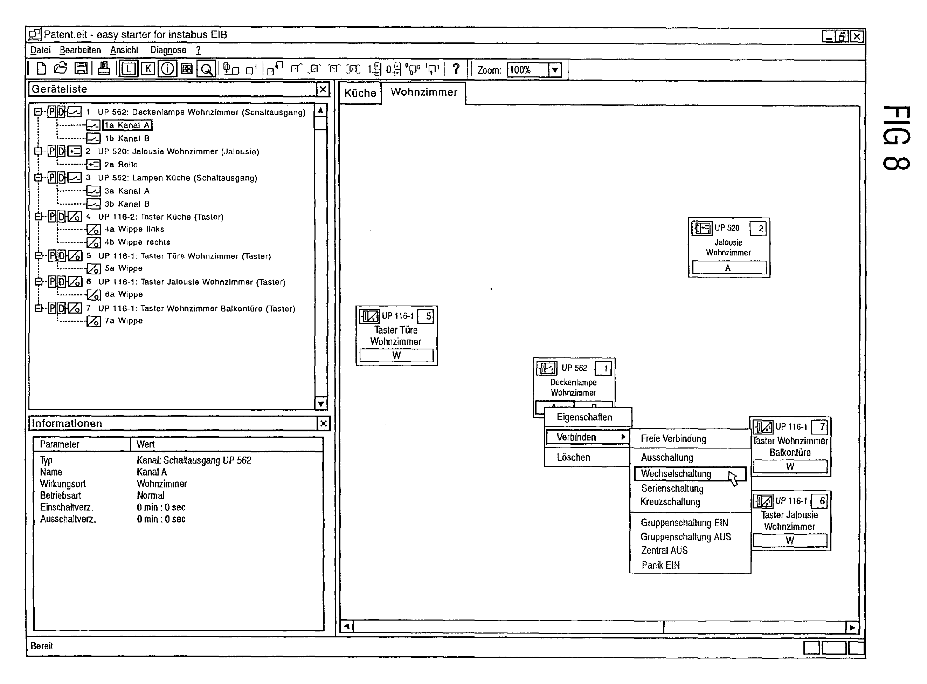

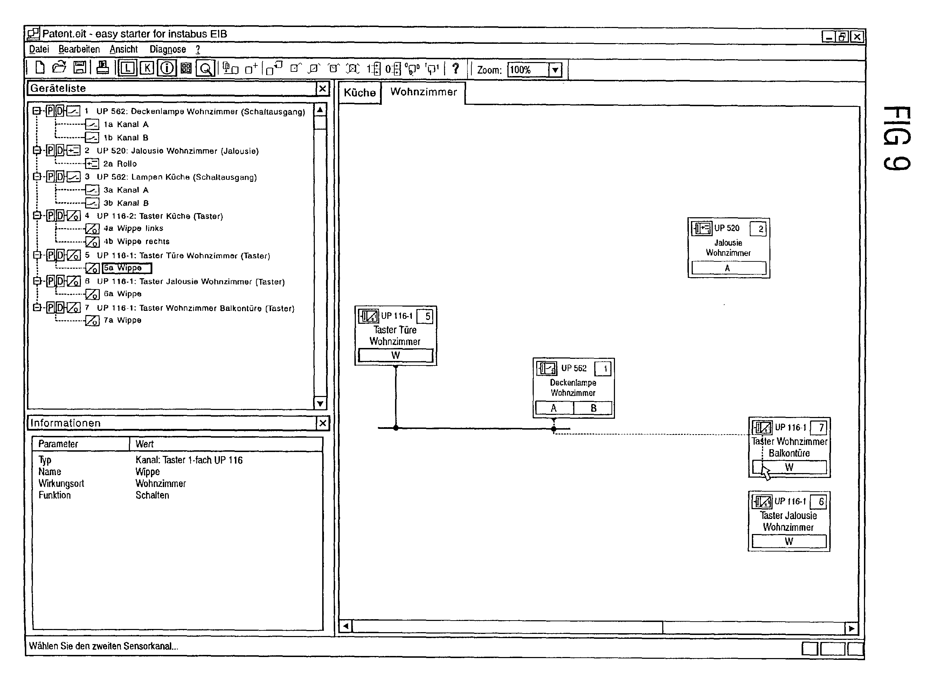

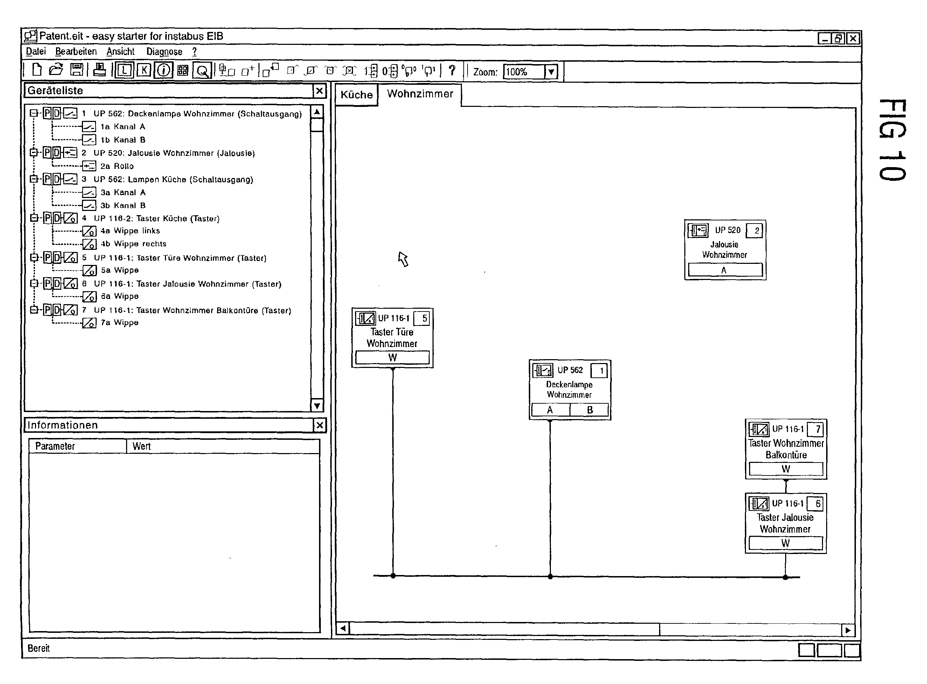

Nach Anwahl des Aktors für die Deckenlampe und dem Aufruf des Wizzards für eine Wechselschaltung ergeht eine Aufforderung, den ersten Taster/Sensor auszuwählen, wie es in Figur 8 dargestellt ist. Nach einer Auswahl des Tasters an der Türe ist der erste Teil der Schaltung realisiert und es ergeht die Aufforderung, den zweiten Sensor bzw. Taster auszuwählen, wie es in der Figur 9 angedeutet ist. Durch Anklicken des Tasters an der Balkontüre ist die Erstellung der Wechselschaltung abgeschlossen, wie aus der Figur 10 ersichtlich ist.

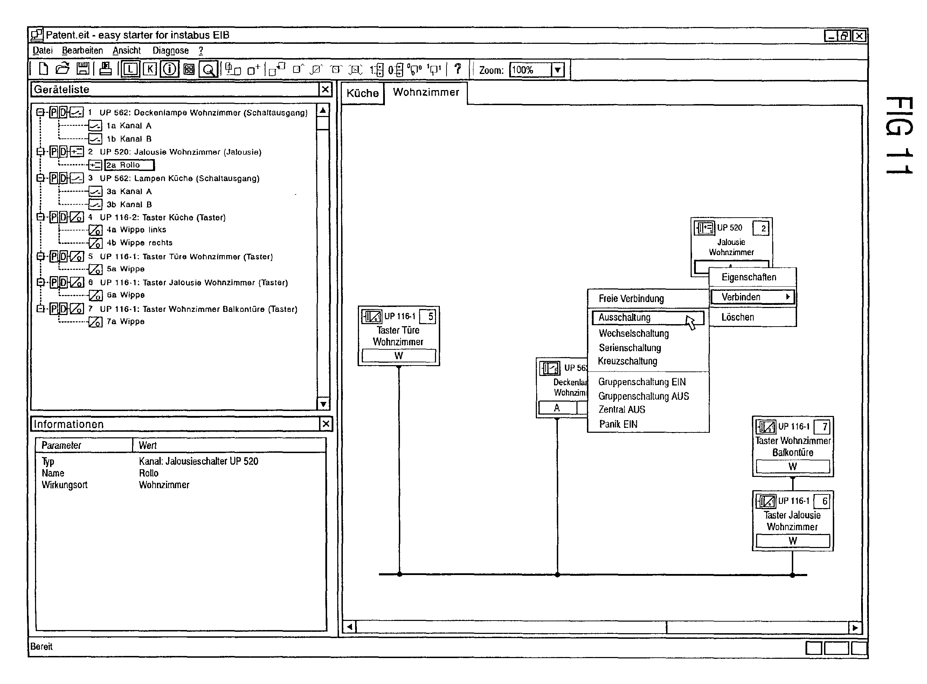

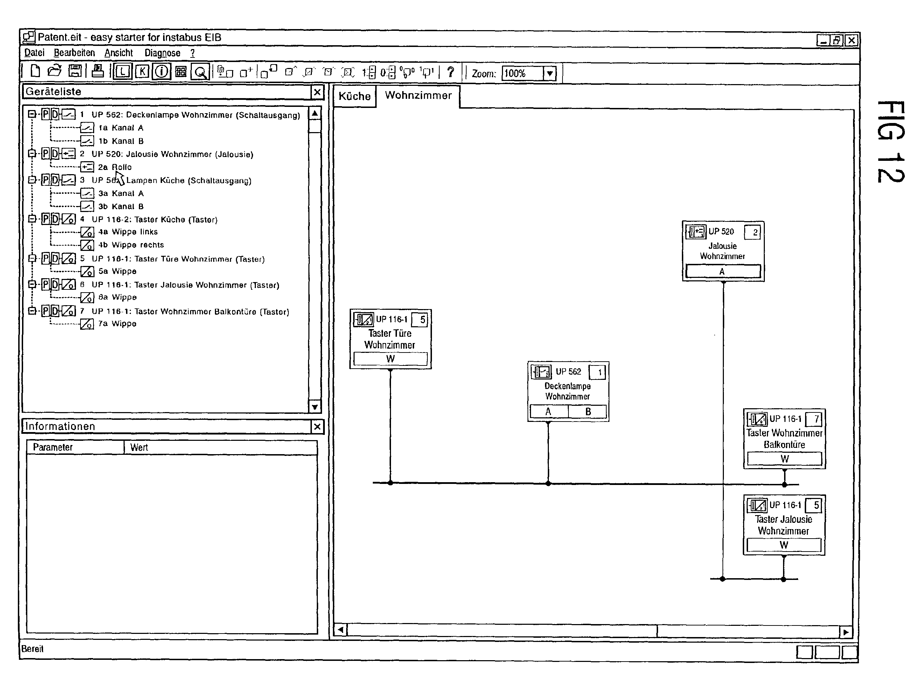

Schließlich erfolgt noch - wie aus der Figur 11 hervorgeht - eine Projektierung einer einfachen Ausschaltung zwischen Taster - Jalousie - Wohnzimmer und Jalousie - Aktor durch eine Anwahl des Jalousie-Aktors, einen Aufruf des zugehörigen Wizzards und eine Auswahl des gewünschten Tasters. Das Ergebnis dieses Vorganges ist in der Figur 12 dargestellt.

Aus der vorstehenden Beschreibung ist ersichtlich, dass mittels der Erfindung ein Elektroinstallateur ohne aufwendige Schulungsmaßnahmen dazu in die Lage versetzt wird, mittels eines einfachen, graphischen Werkzeuges für einen Personal-Computer oder einen Palmtop ein einfaches Installationsprojekt in einem Gebäude schnell und kostengünstig durchzuführen. Dabei kann er seine gewohnte Denkweise beibehalten, da es sich bei den zu projektierenden Elementen bzw. Schaltungen um herkömmliche Dinge wie eine Realisierung eines Ausschaltvorganges, einer Wechselschaltung oder einer Serienschaltung, etc., handelt.

## Patentansprüche

1. Verfahren zum Projektieren von Elektroinstallationskomponenten eines Gebäudes mittels eines graphischen Werkzeuges, wobei
- in einem Bildschirmfenster eine Geräteliste zur Verfügung gestellt wird, die die zu projektierenden Geräte enthält,
- zur Projektierung eines Raumes dieser Raum durch ein eigenes Bildschirmfenster dargestellt wird,
- aus der Geräteliste dem jeweiligen Raum Geräte zugeordnet werden,
- die dem Raum zugeordneten Geräte in dem dem Raum zugeordneten Bildschirmfenster angezeigt werden, und
- unter Verwendung von Assistenten die im Raum-Bildschirmfenster platzierten Geräte graphisch gemäß elektrischer Schaltungen miteinander verschaltet werden.

2. Verfahren nach Anspruch 1,
**dadurch gekennzeichnet, dass**
die Zuordnung eines Gerätes zu einem Raum durch ein Verschieben des Gerätes mittels eines Cursors aus der Geräteliste in das dem Raum zugeordnete Bildschirmfenster erfolgt.

3. Verfahren nach Anspruch 1 oder 2,
**dadurch gekennzeichnet, dass**
die Verschaltung der im Bildschirmfenster platzierten Geräte unter Verwendung eines Assistenten, aufgerufen über ein Programm-Menü, erfolgt.

4. Graphisches Werkzeug zum Projektieren von Elektroinstallationskomponenten eines Gebäudes, mittels welchen Werkzeugs
- in einem Bildschirmfenster eine Geräteliste zur Verfügung stellbar ist, die die zu projektierenden Geräte enthält,
- zur Projektierung eines Raumes dieser Raum durch ein eigenes Bildschirmfenster darstellbar ist,
- aus der Geräteliste dem jeweiligen Raum Geräte zuordenbar sind,
- die dem Raum zugeordneten Geräte in dem dem Raum zugeordneten Bildschirmfenster anzeigbar sind, und
- unter Verwendung von Assistenten die im Fenster platzierten Geräte graphisch miteinander verschaltbar sind.

5. Graphisches Werkzeug nach Anspruch 4,
**dadurch gekennzeichnet, dass**
es ein Personal-Computer oder ein Palmtop-basiertes Werkzeug ist.
